# EUROPEAN PATENT APPLICATION

(11) **EP 1 627 857 A1**
(43) Date of publication of application: **22.02.2006**
(21) Application number: 05011911.4
(22) Date of filing: 02.06.2005
(51) Int. Cl.: C03B 9/453

(54) **Independant air gas supply of a take-out mechanism**

(30) Priority: 05.06.2004 GB 0412624
(71) Applicant: Lattimer Limited, Southport PR8 5AP (GB)
(72) Inventor: Haslehurst, Geoffrey, Southport PR8 5AP (GB)
(74) Representative: White, Martin Paul

(57) **Abstract**

A piston-driven pusher for the translocation of newly formed glassware is provided with a gas supply that is independent of the supply of gas to the piston cylinders bore. This allows for independent control and can also be used to provide more efficient and accurate translocation of glassware. Furthermore, it also allows glassware of improved quality to be produced.

## Description

The present invention relates to the manufacture of glassware and to machinery therefor.

More specifically, it relates to an apparatus for use in a glassware manufacturing machine, whereby newly formed glassware can be accurately transferred from a first surface onto a second surface by means of a pivotally mounted pusher.

Automated glassware manufacturing machines have been known for many years and have been used to manufacture a wide range of glassware, including bottles, jars and a variety of other containers. During the manufacturing process a piece of glassware is typically formed from a large globule of molten glass, known as a gob, which is moulded to form a hot, semi-rigid article that is moved to a lehr (an annealing and tempering oven) for further processing. Moulding typically takes place using an assembly of machines known as independent station (i.s.) machines. Each independent station usually has several moulds (normally up to four), allowing several glassware articles to be produced simultaneously by each machine. The articles so produced are then deposited onto a plate known as a dead plate, where they await subsequent transfer to a conveyor.

Given that several i.s. machines are usually arranged in close proximity to one another, and also given that each i.s. machine can be used to deposit several glassware articles simultaneously onto a dead plate, it is important for the smooth operation of the glassware manufacturing process that once newly formed glassware is deposited onto the dead plate, it is speedily and efficiently removed from the dead plate and is translocated to the conveyor.

Pivotally mounted pushers are used for this purpose. The pushers are piston-driven and are operably connected with a retaining means that is used for retaining the glassware during translocation. Typically the retaining means comprises a plurality of protrusions, which are known in the art as fingers.

GB-A-2084564 discloses one type of pusher mechanism for conveying newly-formed glassware from a dead plate to a conveyor. Here the pusher has a double-piston arrangement in which the pistons are symmetrically mounted. This arrangement provided a significant advance over earlier arrangements in that it can be used to transfer glassware in two directions - either by pivoting in one direction, or by pivoting in the opposite direction. This flexibility of operation means that the pusher can be operated in combination with i.s. machines that are situated either to the right or to the left of a conveyor. The transfer mechanism provided by the double-piston arrangement is known in the art as a non-handed transfer mechanism, because it can be pivoted in a clockwise or anticlockwise manner and is not limited only to "right hand" or only to "left hand" operation. The non-handed pusher can be used in combination with i.s. machines that are laid in a compact arrangement. This allows the most efficient use of the often limited space available in a glassware manufacturing plant.

GB-A-2084564 also discloses the use of fingers to aid in the transfer of newly formed glassware. As the pusher extends towards the dead plate, the fingers are brought into a position at which they lie adjacent newly formed glassware located upon the dead plate. Pivoting of the piston through an arc then causes the glassware to be moved through the arc, because the fingers aid in retaining the glassware in a "pocket" during pivoting. The pocket is typically a corner region located between one side of a finger and a face from which the finger protrudes. Once the pusher has pivoted to a position at which the fingers lie over the conveyor the glassware can be released onto the conveyor. The pusher then returns to its rest position and the process is repeated.

Over recent years pusher units have been provided with air jets that assist in retaining glassware in pockets during translocation of the glassware. For example, US-A-5527372 and GB-A-2292551 disclose a pusher mechanism for an i.s. glass forming machine in which air is supplied towards a piece of newly formed glassware so as to maintain it in a corner pocket formed by a side of a finger of a bottle retaining manifold attached to the pusher and a face of the manifold from which the finger extends. This air is referred to in US-A-5527372 and GB-A-2292551 as "factory air" and is supplied via a conduit that extends through the cylinder and piston of a pusher. The air is directed so that more air flows towards the pocket corner around the container than flows away from the corner around the container. This forces the container into the pocket. When it is desired to release the container from the pocket, the air supply is cut off/reduced. The air provided for this purpose is sometimes known in the art as "vortex air", because it forms a vortex around the container.

Although the air jet system disclosed in US-A-5527372 and GB-A-2292551 can be very effective in retaining glassware in a pocket during translocation, problems can result when it is desired to release the glassware from the pocket so that it can be placed very accurately on the conveyor, or so that it can be placed onto the conveyor at a precise time. This is because there is a lag phase, during which air in the system must be vented/redirected and this makes it difficult to determine accurately when the air supply to the pocket will be switched off/significantly reduced. There is also a tendency for the air jets to cause the pockets to retain glassware for longer than desired and this can prevent the accurate and timely release of glassware onto the conveyor.

However the efficient release of glassware onto the conveyor is crucial to a smooth manufacturing process. If bottles are placed upon the conveyor at the wrong time and/or at the wrong place, then it may be necessary to stop the glass manufacturing process entirely until the problem is resolved. In extreme cases the glassware may not be released onto the conveyor at all, or may be released too early/too late and may topple over. This can damage the glass making machinery and repairs may be needed. In any event it is necessary to stop the manufacturing process until damaged / misplaced glassware is removed. The foregoing problems are particularly accentuated in the case of small and/or lightweight glassware, because this can be easily knocked over/displaced.

GB-A-2320478 is a subsequent patent application filed by the same proprietor as the proprietor of US-A-5527372 and GB-A-2292551. In GB-A-232047 it is admitted that, especially in the case of small containers, there is a risk that a container being transported by a pusher assembly can be displaced from the fingers of the pusher assembly, when an assembly of the type disclosed in US-A-5527372 is used.

The invention disclosed in GB-A-2320478 attempts to address this problem by providing a padded back support that is at an acute angle to the fingers of the pusher and that is also provided with a groove to allow air to flow around the container. Carefully directed air jets then hold the container in place. This is however a fairly complex arrangement and can result in significantly increased manufacturing costs. Furthermore, adjustments are needed if the device is to be used for large bottles.

A further problem with known systems used to retain glassware in pockets is that the air can become contaminated as it passes through various conduits. For example, it may become contaminated with oil and/or with particulate matter. This can have significant adverse effects on the quality and appearance of the glassware produced and can result in a high percentage of rejects. This problem is simply not addressed by the documents discussed above.

There is therefore a major need to provide an apparatus that allows accurate and timely translocation of newly-formed glassware, especially of lightweight glassware, whilst also reducing the risk of contamination of glassware.

The present invention aims to address these needs and to provide a more efficient and reliable apparatus for translocating glassware.

According to one aspect of the present invention there is provided an apparatus for the translocation of newly formed glassware from a first surface to a second surface, the apparatus comprising a pivotally mounted pusher having one or more cylinder bores that accommodate one or more reciprocating pistons, and further comprising a retaining means that is operably linked to the pusher and retains the glassware during translocation; wherein the apparatus is provided with a gas supply via the pusher that is independent of the supply of gas to the one or more cylinder bores accommodating the one or more pistons, and wherein the independent gas supply assists in retaining and/or cooling the glassware during translocation.

The term "gas" is used herein to include air or any gaseous element or mixture that does not substantially adversely affect newly formed glassware. The gas may be filtered. Preferably either air or an inert gas is used.

The provision of an independent supply of gas via the pusher that is directed towards the newly formed glassware represents a major advance in the field of glassware manufacture.

Known assemblies in which gas passes through a pusher and out via finger nozzles towards newly formed glassware utilise the same gas supply that is used to drive the piston(s) of the pusher (sometimes referred to as "machine air" or "factory air".) Thus independent control of gas supplied to the newly formed glassware via the pusher is not possible with such systems.

Indeed, prior to the present invention, the provision of an independent gas supply via the pusher had not even been suggested.

By providing independent control of the gas supply, the present invention allows the time, pressure, temperature, nature and / or duration of gas supply to newly formed glassware to be readily adjusted and to be done in a manner that is independent of other parts of the machinery.

It is true that certain machines use gas that is supplied via arrays of blowers that are spaced at some distance from the pushers. Such blowers are shown in Figure 1 of US Patent No 5429651, for example. However this is a relatively complex arrangement requiring synchronisation of the pushers and blowers. This can cause great difficulties if the pushers and blowers get out of phase. Furthermore, this approach goes in a completely different direction from the present invention.

The present invention takes the radical approach (relative to the arrangement shown in US Patent No 5429651) of providing an independent gas supply via the pusher itself rather than via externally located arrays of blowers. This elegant approach reduces the number of separate components needed. It can result in significant cost and space savings and can also provide improved reliability.

Various preferred features of the present invention will now be discussed in further detail.

Preferably an apparatus of the present invention has a plurality of pivotally mounted cylinders, each cylinder having a bore that accommodates a reciprocating piston. Most preferably, the apparatus comprises a pusher having two pivotally mounted cylinders, each cylinder having a bore that accommodates a reciprocating piston. A "non-handed" pusher is preferably used, for flexibility of operation.

The independent supply of gas can be routed via the pusher by any appropriate route, provided that the gas does not pass through the cylinder bores in which the pistons of the pusher are accommodated.

For example, a conduit for the independent gas supply may be enclosed within an exterior casing of the pusher (so that it passes through the pusher). Less preferably, it may be attached to the pusher casing (so that it is located on the pusher body, rather than passing through the pusher). For example, it may be mounted onto the casing of the pusher by clips or clamps, it may be soldered in place, or may be otherwise held in position.

One or more valves may be provided for channelling the independent gas supply in a controlled manner, as discussed later.

The retaining means that is operably linked to the pusher desirably comprises a plurality of protruding members. These can simultaneously engage a plurality of pieces of newly formed glassware. A plurality of spaced fingers may be provided for this purpose. They may, for example, be provided in the form of a manifold, as is known in the art.

The independent gas supply is used to provide gas towards glassware engaged by the retaining means. The independent gas supply may be channelled from the pusher body towards the retaining means via a tube, pipe or any other suitable conduit.

The conduit may direct gas towards a manifold or any other arrangement suitable for directing the gas towards suitably positioned outlets (e.g. nozzles). Thus the gas can pass through the outlets under pressure.

Although the apparatus can be used to transfer newly formed glassware to various locations, the most preferred application is to transfer the glassware to a conveyor. Desirably, the apparatus is used to translocate newly formed glassware from a dead plate to a conveyor. The conveyor will generally lead (either directly or indirectly) towards a lehr.

The apparatus may comprise a distributor having a conduit that is part of an arrangement allowing gas from the independent gas supply to be channelled towards the glassware during at least a portion of the time over which pivoting of the pusher occurs. The term "distributor" is used broadly herein to cover any component/assembly arranged to channel gas from a first to a second location. It therefore includes within its scope any appropriate delivery/coupling systems.

Desirably, the distributor is arranged to prevent gas from the independent gas supply being channelled towards glassware engaged by the retaining means, once the pusher has pivoted through a given angle. (This embodiment of the invention is described in detail later on in Example 1 and can be contrasted with an alternative embodiment that is described in Example 2.)

In order to achieve this, the distributor preferably comprises a further conduit that allows gas from said independent gas supply to be vented (without first contacting the glassware), once the pusher has pivoted through the given angle. This allows the gas supply to the glassware to be rapidly cut off or reduced.

The given angle will depend upon the layout of machinery and all appropriate layouts are within the scope of the present invention. However it is preferred that this angle is less than 90° and greater than 45°. More preferably, it is between 45° and 85°, or between 50° and 70°. For example, it may be about 60°.

The distributor preferably engages a connecting member that is connected to the pusher and is rotatably mounted relative to the distributor. (The term "rotatably mounted" is used herein to indicate that at least partial rotation occurs about a central axis. Thus complete rotation through 360° is not required.)

The connecting member desirably has a generally cylindrical portion that rotates within a corresponding aperture of the distributor, or *vice-versa*. Preferably, the connecting member is a sole plate.

The connecting member can be connected to the pusher by a dovetail connection that is held in place by a corresponding clamp. The use of dovetail clamping eliminates the need for slots for through-bolts to attach the pusher body to the connecting member, thereby avoiding restrictions due to the finite lengths of slots. The dovetail clamping arrangement thereby allows the pusher to be positioned in a more flexible manner than with existing arrangements. This allows the pusher to be positioned so that it can be pivoted through a wide arc of pivot of the pusher. Typically an increase of around 45% in the arc of pivoting can be achieved. The dovetail may be present on the pusher and a releasable clamping arrangement for clamping the dovetail may be present on the connecting member, or *vice-versa*. Adjustment means may be provided so that once the clamping means has been unclamped the position of the pusher on the connecting member can be easily adjusted before re-clamping occurs. The adjustment means may, for example, be in the form of a rack and pinion.

The connecting member desirably comprises one or more conduits for the gas that is used to advance / retract the piston(s) of the pusher. Preferably these communicate with one or more conduits provided in the axle. The connecting member may have a further conduit that allows gas to pass from an independent gas source through the distributor, through said further conduit and through a conduit provided in the pusher, so that the gas can be directed from the independent gas source towards gas jets (for retaining glassware in pockets during translocation and/or for cooling it).

A control means can be used to control the independent gas supply in a manner that operates independently of the supply of gas to drive the pistons in the cylinders. The control means is preferably computerised (although this is not essential because manual controlling means may be provided).. It may have one or more manual over-rides. It can be used to control the independent gas supply so that gas can be supplied at different times, for different periods, at different pressures and/or at different temperatures from the gas that is used to operate the one or more cylinders.

The present invention also includes within its scope an assembly comprising an apparatus of the present invention and one or more i.s. machines, wherein the assembly is arranged so that the apparatus co-operates with the one or more i.s. machines in order to translocate newly formed glassware provided by the one or more i.s. machines onto a conveyor.

A further aspect of the present invention is a method of producing glassware comprising using one or more i.s. machines to provide newly formed glassware, transporting the newly formed glassware to a conveyor with an apparatus of the present invention, and finishing the glassware. Finishing the glassware typically involves annealing and/or tempering in a lehr.

Glassware produced by a method of the present invention is also within the scope of the invention. As indicated previously, such glassware can have significantly improved quality due to reduced contamination.

A further aspect of the present invention is that of modifying existing machinery.

The present invention includes a method of modifying an apparatus that is used for the translocation of newly formed glassware from a first surface to a second surface, the method comprising replacing a pusher of the apparatus with another pusher, wherein the other pusher has a gas supply that is independent of the supply of gas to one or more cylinder bores in which one or reciprocating more pistons of the other pusher are accommodated.

Alternatively, an existing pusher may be modified rather than replaced. Thus the present invention also includes a method of modifying a pusher of an apparatus that is used for the translocation of newly formed glassware from a first surface to a second surface, the method comprising providing the pusher with a gas supply that is independent of the supply of gas to one or more cylinder bores in which one or more reciprocating pistons of the pusher are accommodated.

The modifications discussed above can assist in retaining glassware during translocation and/or in cooling the glassware during translocation, relative to prior art systems..

They can also provide increased control of the deposition of glassware onto a conveyor and reduced contamination of the glassware.

An apparatus that has been modified by such methods and an assembly comprising such a modified apparatus are also within the scope of the present invention.

A further aspect of the invention is a pusher of the present invention *per se.* The pusher may be sold separately. It may be sold as part of a kit optionally including instructions for use. Other components such as a retaining means and/or means for securing the pusher to a retaining means may optionally be provided in the kit.

Thus the present invention includes within its scope a pusher for use in translocating glassware; wherein the pusher has a gas supply that is independent from the supply of gas to one or more cylinder bores in which one or more reciprocating pistons of the pusher are accommodated.

The pusher is desirably adapted to be connected to a retaining means so that, when the pusher is in use, gas can be supplied via the pusher towards glassware held by the retaining means, without passing through the one or more cylinder bores of the pusher.

The pusher can be connected to the retaining means by bolts, clamps screws or any other appropriate securing devices. Preferably, the securing devices are releasable so that the pusher can be subsequently detached from the retaining means (e.g. for ease of maintenance).

The present invention will now be described by way of example only, with reference to the accompanying drawings; wherein:
Figure 1 is a perspective view, illustrating how a known apparatus is used to translocate hot, newly formed glassware from a dead plate to a conveyor.
Figure 2 is a partial longitudinal section through a pusher unit of the present invention, with the pusher shown in an extended state and with fingers contacting a piece of newly formed glassware that is located upon a dead plate.
Figure 3 is an exploded view illustrating how a distributor ring and sole plate of the device shown in Figure 2 engage one another in one embodiment of the present invention.
Figure 3a is an alternative embodiment of the invention to that illustrated in Figure 3, with a modified sole plate and a distributor ring that has one outlet plugged.
Figure 4 is a partial longitudinal section illustrating a delivery valve of the present invention.
Figure 5 is a perspective view showing how the sole plate that is shown in Figure 3 is clamped to a pusher in an apparatus of the present invention.

### Comparative Example

### (Known pusher unit)

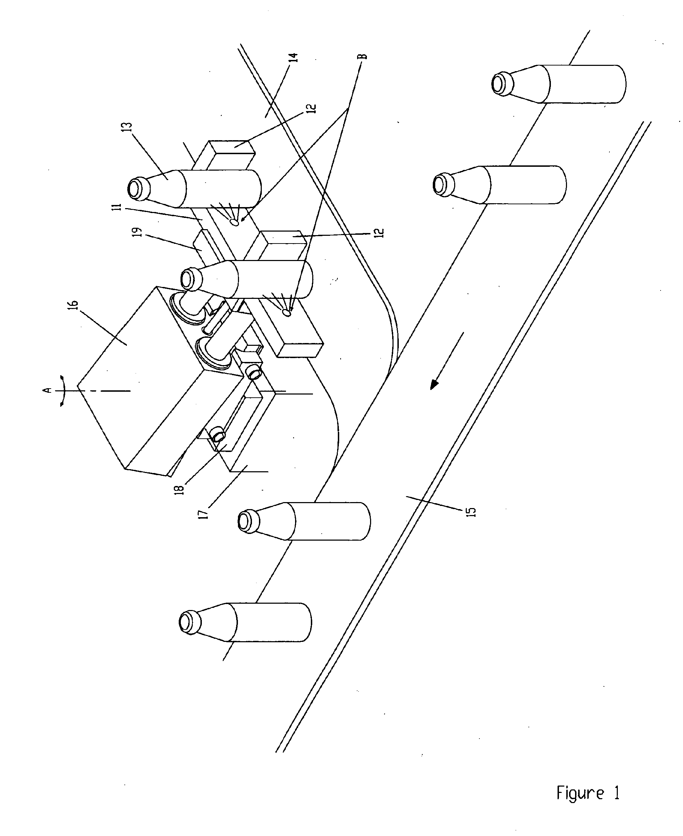

Referring now to Figure 1, a perspective view of a known apparatus used to transfer newly formed hot glassware (13) from a dead plate (14) to a conveyor (15) is provided.

Known pusher unit (16) comprises two parallel cylinders (not shown). Each cylinder has a bore that contains a reciprocating piston. The pistons are connected to piston rods, which are themselves connected to a front plate (19) and serve to drive the front plate (19) forwards and backwards under pneumatic control. The front plate (19) is connected to a pusher plate (11) that carries a plurality of protruding fingers (12) and has a plurality of apertures through which air jets (B) issue at certain times during operation of the apparatus. (For ease of reference the term "air" is used in connection with the figures, although it will be appreciated that any suitable gas can be used.)

A sole plate (18) is located underneath the pusher (16) and is in fixed engagement therewith during use. The sole plate (18) is connected to a turntable (17), allowing the pusher (16) to rotate about a vertical axis (A) that passes through a central axle of the turntable.

At a predetermined stage, air under pressure (known as "forward air") is admitted to the bores of the cylinders contained within the pusher unit (16). This is achieved by means of an electrically controlled pneumatic valve (not shown). The influx of pressurised air causes forward advancement of the pistons and piston rods of the pusher (16), thereby causing the front plate (19), the pusher plate (11) and the fingers (12) all to move forwards in the direction of the dead plate (14).

The forward movement of the pistons is co-ordinated with the deposition of newly formed glassware (13) onto the dead plate (14). Thus the fingers (12) move into a position over the dead-plate (14) such that at the end of the forward movement the fingers (12) are adjacent to newly formed glassware (13). In this position, and with the aid of air jets (B) (as discussed later), the glassware (13) is positioned in corner "pockets" located between the fingers (12) and the front wall of the pusher plate (11) (from which the fingers (12) protrude).

Once the glassware (13) is located in the corner pockets, the pusher (16) is pivoted via the turntable (17) thereby causing the glassware (13) in the pockets to be swept through an arc towards the conveyor (15) so that it can be deposited onto the conveyor (15).

As indicated above, air jets (B) are provided through outlets in the pusher plate (11) to assist in maintaining the glassware in the pockets prior to it being deposited on the conveyor (15). Typically the air jets (B) are actuated either at, or shortly before, the end of the extreme outward strokes of the pistons. This occurs by virtue of ports being uncovered within the cylinders in which the pistons are housed so that air (known variously as "actuation air" or "forward air") is channelled through the piston cylinders and rods, through the pusher plate (11) and out via the air jets (B).

In order to aid in depositing the glassware (13) onto the conveyor (15), the air jets (B) are turned off shortly before the newly formed glassware (13) reaches the conveyor. This is achieved by the aforementioned electro-pneumatic valve reversing its state, thereby cancelling pressure to the forward side of the cylinders and allowing any residual pressure within the cylinders to start to vent to atmosphere. This in turn routes the pressurised air to the opposite side of the cylinders so as to cause the fingers (12) and pusher plate (11) to become rapidly displaced from the glassware (13) as the glassware (13) contacts the moving conveyor (15). It will be appreciated by those skilled in the art that cancellation of the forward air in known pusher units cancels the air jets (B), because these are derived from the same air supply as the forward air.

When the procedure described above occurs correctly and in phase, the glassware (13) is maintained in the pockets during pivoting and is released smoothly, so as to be deposited onto the conveyor (15) at desired locations and time intervals. The pusher (16) then returns to its original position ready for the commencement of another cycle of collecting and depositing newly formed glassware (13).

The accurate and timely deposition of newly-formed glassware (13) upon the conveyor (15) is a crucial part of the operation, requiring precise co-ordination. Glassware (13) will normally already be present upon the conveyor (15) (unless the glassware manufacturing process has just started up). The pusher (16) is used to deposit additional pieces of glassware (13) onto the conveyor (15) at carefully controlled intervals. If the glassware (13) is not placed onto the conveyor (15) at the correct position and time then it may collide with other pieces of glassware (13) and become damaged. Glassware (13) may even fall off the conveyor (15). It may then be necessary to stop the glassware manufacturing process in order to carry out repairs and to remove misplaced / damaged glassware (13). This can be very laborious and expensive. Furthermore, even when the process is re-started, there is a risk that such failures may occur again.

Without being bound by theory, one of the factors that may cause inaccurate / untimely deposition of glassware (13) is that, due to rapid switching of the electro-pneumatic valve, the air pressure can reach a point in the retract side of the cylinders so that retraction commences before pressure in the forward side of the cylinders has fallen into equilibrium with atmospheric pressure. This can cause the air jets (B) to continue to operate even when retraction of the pistons commences. This can delay the release of the newly formed glassware (13) onto the conveyor and can result in the glassware (13) being pulled off the conveyor (15). However, even if this does not occur, it can result in the glassware (13) being incorrectly placed upon the conveyor (15), or in the glassware (13) toppling over (especially if it is lightweight). Furthermore, even when the air pressure in the cylinder has dropped to equilibrium with atmospheric pressure, retraction of the piston within the cylinder can cause a build up of pressurised air that issues through the outlets in the pusher plate (11) as air jets (B). This can again cause misalignment of glassware (13) on the conveyor (15) and/or damage to the glassware (13) or associated machinery via collisions.

In the light of the foregoing analysis it will be appreciated that known pusher mechanisms such as those described with reference to Figure 1 suffer a number of shortcomings. These are accentuated by a trend towards the production of light glassware at high turnover rates, which imposes increasingly strict demands on the reliability and efficiency of the mechanisms used to translocate the glassware (13) from the dead plate (14) to a conveyor (15).

For convenience, some of the main shortcomings of known pusher mechanisms (such as the one described above in relation to Figure 1) are summarised below:
1) Air for auxiliary application is currently fed through an actuating piston cylinder by virtue of a valve or port being uncovered when the piston approaches the very end of its outward stroke, thereby causing:
   a) a delay of air appearing at the operating area (the fingers) until after the fingers are extended, due to the time taken for sufficient pressure to build up at the finger jets for the jets to become effective (This necessitates a pause whilst the auxiliary air takes control of the glassware within the fingers, before rotational movement of the pusher mechanism can commence.)
   b) a delay in cut-off of auxiliary air after the fingers are over the conveyor due to the need to evacuate the air from the actuating cylinder both via a lengthy tortuous route back to the operating valve situate on the main machine frame, and via the finger jets. (The decay of pressure can be unduly lengthy, given the desired speed of operation. Any significant delay so experienced will cause glassware to be misplaced or in the case of taller items to topple on the conveyor, if the auxiliary air is still in at least partial control of the glassware within the fingers when retraction of the fingers commences. This situation can only be avoided by slowing down the whole machine to an acceptable speed for the finger-conveyor transfer.)
   c) a secondary volume of air to be issued from the finger jets when the actuating piston starts to retract due to the displacement of air within the actuation cylinder (with a similar result to b) above).
   d) unclean air to be blown through the finger jets in so much as it has to pass through the activating mechanism and can become contaminated with lubricant or with particulates, causing damage to glassware. (By deriving auxiliary air from the machine control air, auxiliary air is thus limited to machine air and this therefore precludes the use of ultra clean air or alternative gasses or mixtures of gasses, as is required for certain glassware.)
2) Currently available units with auxiliary air capability cannot be used on older type machines not so equipped for auxiliary air, without substantial and expensive alteration to the machine's pneumatic layout, valving and control systems, requiring a high degree of skilled labour. This is a major problem, because the supply of auxiliary air towards the fingers is increasingly desired by manufacturers.
3) Currently known pusher units are affixed to a machine turntable by bolts either on fixed centres or through slotted holes. This means:
   a) Removal of fastening bolts is required before the working assembly (pusher body assembly) can be detached for exchange, a slow and tedious process when hampered by gloved hands due to the elevated temperatures encountered; and .
   b) The position of attachment of the pusher body is limited by the slot length. This limits the adjustability of the position of the pusher so that it can only be used to accommodate a limited range of sizes of glassware. Thus several different pushers may be needed if the glass manufacturing process is to be used for a wide variety of glassware.
4) The movement of the pusher plate and associated fingers after receipt of a command to or from a rest position is delayed by the high mass of the reciprocating assembly. This delay occurs until the pressure of actuating air within the actuation cylinder rises to overcome both static inertia and frictional holding forces. This is particularly significant when the pusher unit is required to retract from a position at which glassware is deposited onto the moving conveyor. (Currently known designs rely upon providing a large piston area and hence a large swept cylinder volume, or upon gear train amplification in order to overcome static inertia. However, both of these run counter to a speedy response.) In practice, the accurate prediction of the time required to respond to an electronic command has not been achieved with existing systems, because frictional forces at rest are dependant upon a number of variables that are difficult to calculate and may vary with temperature, pressure, etc. (e.g. bearing loading and lubrication). This has led to machines being set up with a response time to commands that errs on the slow side. A related disadvantage here is that of the shock loading experienced when a large reciprocating mass is bought to rest at the end of a stroke. This can significantly reduce the service life of the pusher assembly or of associated machinery, especially that of turntable bearings.

There are therefore numerous problems with existing machinery of the type described with reference to Figure 1. These have not been successfully addressed, although such machinery has been used for many years and the problems have also been know for some considerable time. There is therefore a long-standing need for these problems to be addressed.

The apparatus of the present invention overcomes or at least alleviates one or more of these problems.

Two non-limiting examples of an apparatus of the present invention will now be described in Examples 1 and 2.

### Example 1

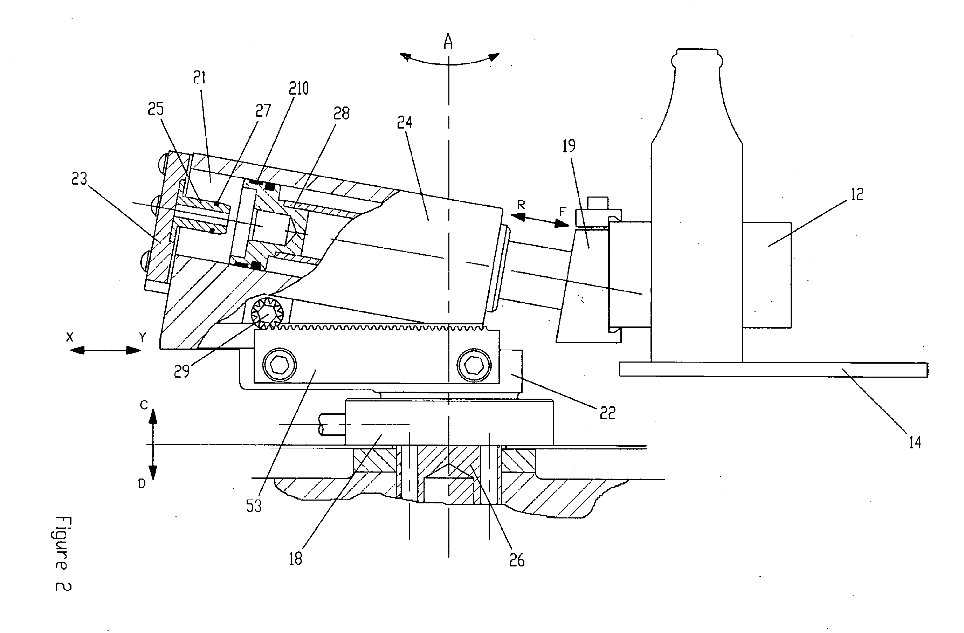

Figure 2 shows a longitudinal section through a pusher mechanism of the present invention. For reference purposes, a horizontal line is provided, above which a rotatably mounted pusher assembly of the present invention is shown (see arrow C), and below which an existing machine base is shown (see arrow D).

The pusher (24) is rotatably mounted about a vertical axis (A) that passes through the axle (26) of an existing machine turntable.

A sole plate (22) is also provided and is clamped by means of bolts to the upper surface of the axle (26). A distributor ring (18) is located below the sole plate and engages the sole plate (22) in such a manner so that the sole plate is rotatable relative to the distributor ring (18). The sole plate (22) provides a number of functions. It acts as a spacer between the pusher (24) and the distributor (18). It provides a platform for the secure clamping of the pusher (24). It allows the position of the pusher (24) to be adjusted along the axis indicated by X-Y, so that it can be used for glassware of different sizes / diameter. It also has a number of conduits that act in distributing air (as described later).

The distributor ring (18) is fixed to the axle (26) of a turntable of an existing machine base via bolts in existing holes of the machine base. The distributor ring (18) contains machined ports. One is for air admission to the pusher (26) to drive the pistons and one is for exhausting air from the pusher (16), which can either exhaust to atmosphere or to a convenient location.

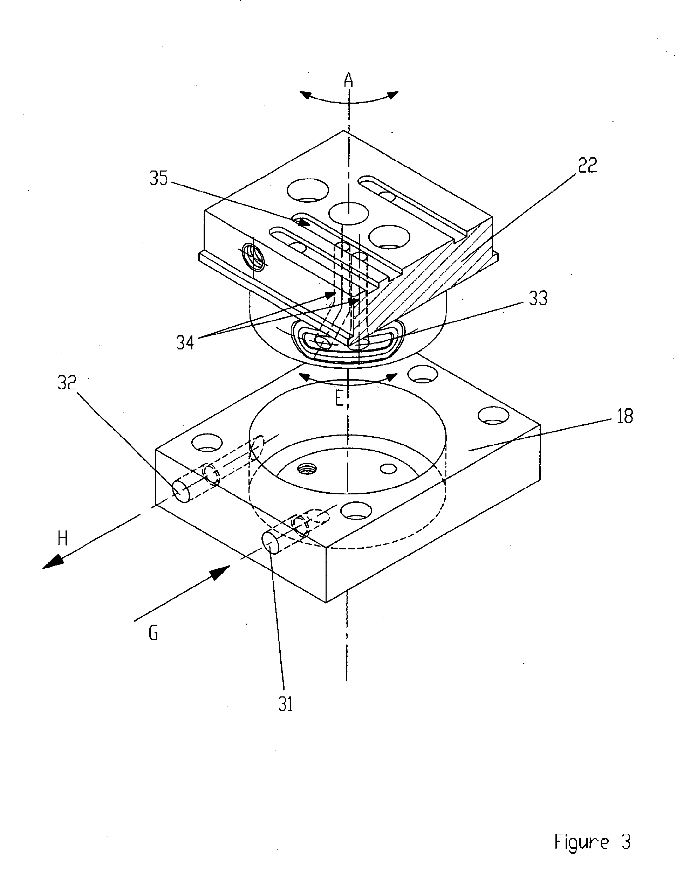

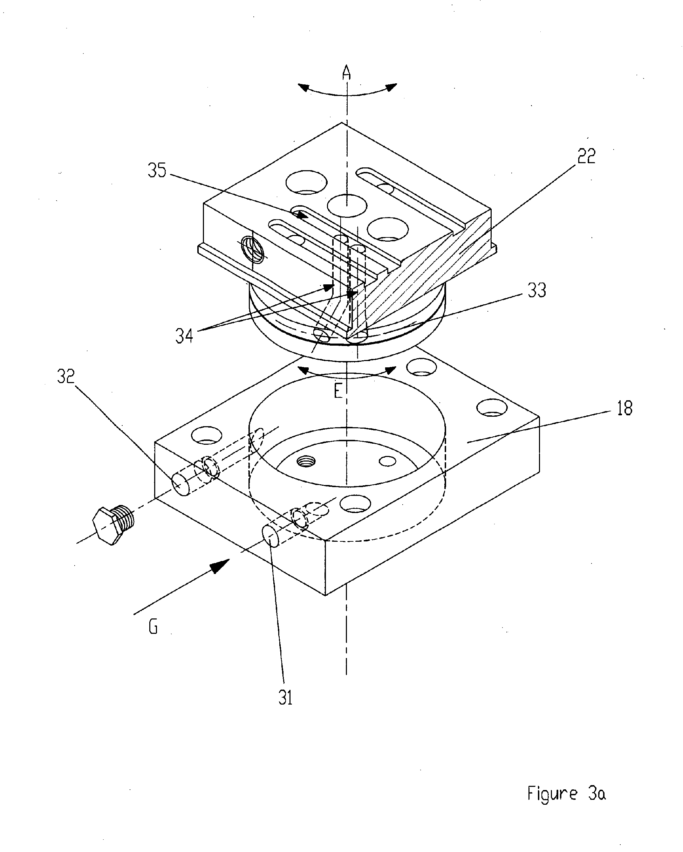

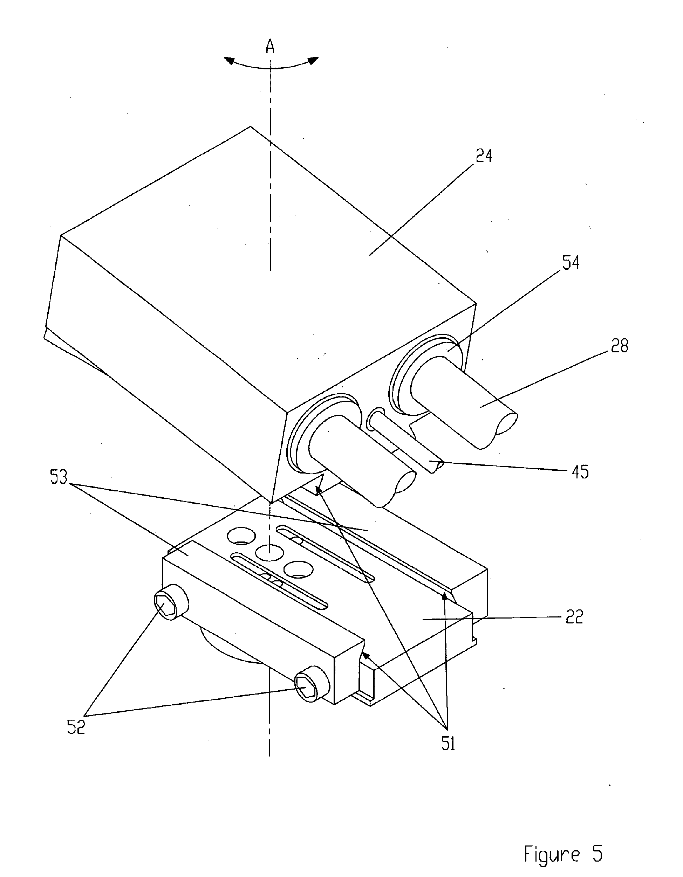

Turning now to Figures 3 and 5, it can be seen that the sole plate (22) carries drilled passages that act as conduits for air under pressure. Two of these conduits communicate permanently with drillings in the face of the axle (26) (in accordance with common practice) and are used for the advancement and retraction of the pusher plate (11). A third conduit (33) is provided by a third drilled passage, which terminates in a port on the outer diameter of the base of the sole plate (22) and communicates with the ports in the distributor plate (18) when aligned by the rotation of the axle (26). All three drilled passages terminate on the upper face of the sole plate (22) in slots that afford communication with the pusher (26) regardless of its lateral location on the sole plate (22). Additionally, the sole plate (22) has threaded holes to each side, to which clamp plates (53) are affixed. These serve to securely clamp the pusher (26) in a desired lateral position, as discussed later.

The pusher (26) has a light alloy casting and also has two parallel cylindrical bores fitted with liner sleeves. These sleeves act as wear surfaces for enclosed pistons (28). The pusher (26) is secured on top of the sole plate (22) by means of a dovetail tennon (51) that is present on its base and is engaged by complementarily shaped clamping plates (53), as shown in Figure 5. These plates (53) are secured to the sole plate (22) by bolts (52), which can be slackened for adjustment. By this means, clamping can be effected at variable points along an axis lying parallel to the cylinder bores. The clamping plates have gear teeth, as shown in Figure 2. The gear teeth engage a meshing pinion (54) that is fixed to the pusher body (26) and allows graduated adjustment of the pusher body (26) along the X-Y axis shown in Figure 2.

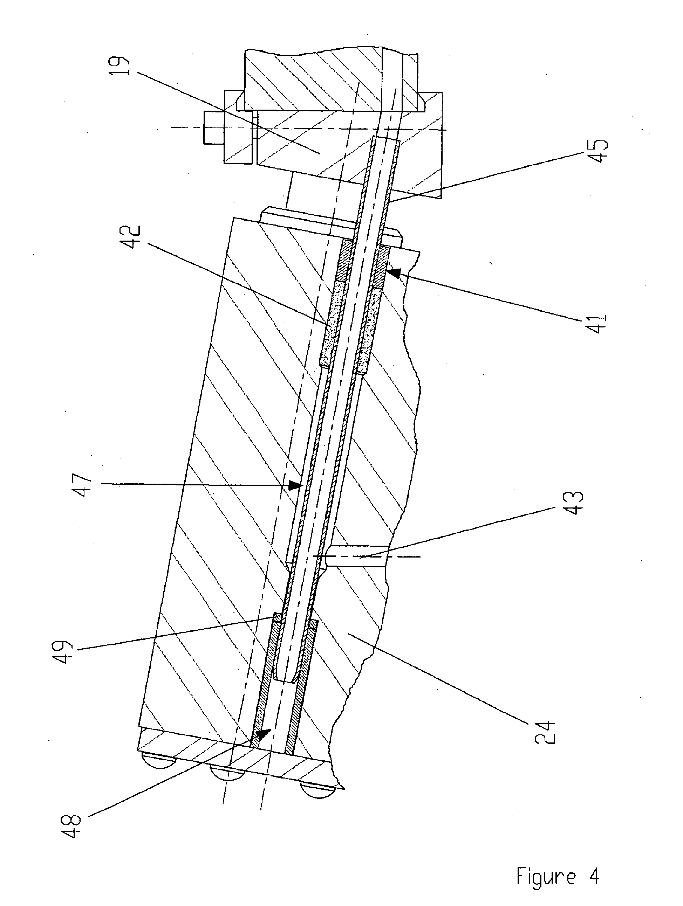

An end plate (23) is located at the rear of the pusher (26). Towards the front of the pusher (26), bushings (54) are provided and act as supports for the piston rods (28). They also act as stops that limit the extent of travel of the piston rods (28). A chamber is located between the cylinder bores and lies parallel thereto. This carries the component parts of the delivery valve, as will be described later with reference to Figure 4. Conduits from the base of the pusher (26) (which is clamped to the sole plate (22)) conduct air to various parts of the pusher unit according to function. At the rear of the back plate (23) a rapid exhaust valve is provided (not shown), which acts to vent air expelled from the cylinders quickly to atmosphere on retraction of the pistons (28).

The back-plate (23) also carries spigoted snubbers (25) with seals (27) attached. These act as valve seals, allowing admission of air via a conduit passing through the centre of the snubber spigot for forward movement of the pistons (28), but preventing exhaust of the cylinder air via this route during the damping of the rearward motion of the pistons (28).

Provided within the back-plate assembly (23) are the necessary ports that act as conduits in conducting actuating air into and out of the rear of the cylinders (21). An adjustable restrictor is also provided for the purpose of regulating the escape of trapped air during the inertia damping portion of the rearward stroke of the pistons (28) after the pistons (28) have contacted the snubber seals (27).

The pistons (28) are supported and guided by the action of the piston heads bearing upon the cylinder liner via an anti-friction support ring and, at the front of the cylinder, by guide bushes, which are treated for minimal friction and maximum wear resistance and protected from ingress of abrasive matter by seals and scrapers. The guide bushes in conjunction with the alignment of the piston heads to cylinder liner supports ensure parallel action of the piston rods.

A front plate (19) is attached to the extreme outer ends of the piston rod assembly. The front plate acts as a vehicle to carry the transfer tube (45), the pusher plate (11) and a safety guard (*not shown for clarity).* It also contains porting to conduct auxiliary air from the delivery tube (45) to the pusher plate (11).

In order to eliminate shock at the extremes of piston stroke movement when the pistons are bought to rest, damping or cushioning devices are incorporated, at the front the piston first abuts a spring before reaching its end of stroke limit, at the rear, rearward movement is damped by the piston towards the end of its stroke enveloping a shaped seal with flexible lips (27) situated on a hollow spigot (25) at the back of the cylinder, but sufficiently forward of the back face of the cylinder to trap a volume of air within the enclosed cavity thus created. Being so trapped the pressure of this air is so raised as to counter the rearward movement of the piston in so much as the kinetic energy of inertia is transformed to pressure energy. By means of an adjustable escape valve, set according to both the speed of retraction of the pistons coupled with the load carried, the pressure of the trapped air is allowed to diminish at a sufficiently rapid rate to allow the pistons to come to rest abutting the back face of the cylinder without creating undue shock.

Having described the component parts of the apparatus illustrated in Figures 2 to 5, the typical operation of the apparatus will now be described in further detail:

### Mode of operation

Air from a local or remote source is admitted via a pressure regulating valve to a connection port on a distributor ring (18), which is fixed by means of 4 screws to the uppermost surface of the machine section turntable (17). (If desired the gas may be pre-filtered and/or pressure regulated. Filters and pressure regulating valves are well known in the art.)

This distributor ring (18) defines a central aperture into which a generally cylindrical base portion of the sole plate (22) fits so that it can rotate through an arc of approximately 90° relative to the distributor ring (18). (The arc can vary with different machine arrangements.)

The distributor ring (18) has two ports in communication with the base of the sole plate (22). These are an admission port (31) and an exhaust port (32). The exhaust port (32) is located at an arcuate distance of about 60° from the admission port (31).

In order to operate the pusher from its rest position (at which the pistons are not extended), air is passed from the admission port (31) in the distributor ring (18) to a slotted port (33) in the sole plate (22). The slotted port (33) is sealed from leakage to atmosphere by a resiliently deformable seal.

The slotted port (33) extends through an arc of circa 60°, corresponding to the arcuate distance between an admission port (31) and an exhaust port (32). This arc limits the duration of the auxiliary air issuing from the front plate during pivoting of the pusher unit during the transfer of glassware (13) to the conveyor (15), as will be described later. Thus air is available for circa 60° of the 90° (2/3 of the arcuate distance) through which the pusher unit (24) pivots when translocating glassware (13) from the dead plate (14) to the conveyor (15).

The air flowing through the slotted port (33) flows through drilled passages (34) and slot (35) in the upper face of the sole plate (22), through further drilled passage (43), and then to the central portion of a delivery valve chamber situated within the pusher (24) (see Figure 4). This chamber contains valve elements and seals that inhibit the flow of air to air jets (B), until the front plate (19) has advanced a prescribed distance towards the dead plate (14). The delivery valve chamber comprises three sections, as described below:

A centre section (47) of the delivery valve chamber receives air (by the route described above) whilst the slotted port (33) pivots through an angle of up to 60° relative to the admission port (31).

A rear section (48) of the delivery valve chamber is also provided. The length of this section effectively determines the commencement of the supply of air to the outlets. This section is situated at the rearward end of the pusher body (16) and is separated from the centre section (47) by a valve seal (49). The valve seal (49) forms a seal with a slidably mounted transfer tube (45) when the transfer tube (45) slides a given distance towards the rear of the pusher (16). The transfer tube (45) is fixed to the front plate (19) and moves in unison with it.

The third section (41 ) of the delivery valve chamber contains a bushing (42) to support the transfer tube (45). This acts as a seal to prevent escape of gas to the atmosphere. During the rear portion of its stroke the transfer tube (45) contacts the valve seal (49), thus sealing and preventing gas from the central chamber communicating with the rear chamber or with the aperture of the transfer tube (45).

Forward movement of the pusher mechanism occurs at the appropriate time due to pressurised air being admitted (by separate, known means) to the rear of the pusher cylinders (21). This drives the pistons (28) towards the dead plate (14). The front plate (19) is connected to the pistons and therefore also moves forward, thereby pulling the transfer tube (45) out of the valve seal (49).

At this point pressurised air from the central chamber (47) is free to enter the transfer tube (45) and to travel along its length. It can then pass through the front plate (19), and the pusher plate (11) to the air jet outlets (B).

The air issues from outlets (B) before the pusher plate (11) is pushed out to its maximum extent. This allows pressure to build up in the transfer tube (45) and associated conduits so that air at high pressure is available for the air jets (B), thereby allowing good control of the glassware (13) as the pusher plate (11) and fingers (12) reach their extreme outward position.

This minimises delay in engaging glassware (13) and increases the efficiency of the operation. Air will continue to issue from the air jets (B) as long as the pusher (16) is in a forward position and the distributor plate admission port (31) is aligned with the sole plate admission slot (33).

When the pusher mechanism is fully forward, the normal sequential action of the machine is as follows:

The tuntable axle (17) turns, which in turn causes the sole plate (22) to rotate within the distributor ring (18). Eventually this causes the admission slot (33) in the sole plate base (22) to lose communication with the admission port (31) in the distributor ring (18). Then (after a very short distance where it is in communication with neither port) the admission slot (33) gains communication with the exhaust port (32). Air that is contained within the transfer tube (45), valve chamber sections and connecting porting is now able to exhaust to atmosphere. Thus the supply of gas to the front plate (19) and pusher plate (11) and fingers is cut off and vented almost instantaneously. This allows glassware (13) to be rapidly released from the effects of the air jets (B) at a predetermined point so that the glassware (13) can be readily released onto the conveyor (15).

By virtue of the above-described valving arrangement being contained within a single unit, the timing of switching on and off the air jets (B) is independent of other machine operations (apart from the pivoting of the turn-table and movement of the plate carrying the finger assembly). This means that the present invention can be easily used to modify existing glassware manufacturing machines. This can significantly increase the reliability and efficiency of the machinery and the quality of glassware produced, without incurring high labour or parts costs in modifying the existing machinery. Furthermore, because the machinery can be adapted rapidly, the machinery is inoperative only for a very short period before glass manufacture can recommence at improved efficiency and reliability.

### Example 2

An alternative embodiment of the present invention is illustrated in Figure 3a. Here the sole plate has a slot (33) that simply acts as a conduit and does not therefore function in the timing of switching on/off of the supply of air to air jet outlets (B). The extent of the slot (33) need not therefore be limited. Indeed the slot (33) may be a full circumferential slot for ease of manufacture.

The on/off switching of the air supply is controlled electronically. Thus the machine can be set up so that the air is automatically switched on/off at desired times. The air fed into admission port (31) can be from any suitable source. The air source for the air jets (B) may be independent of other sources of air to the machine. Alternatively there may be a common air supply but air for the air jets (B) may be channelled away from air used for other purposes (e.g. away from air directed to cylinder bores and used to drive pistons). If desired the air may be filtered, pressurised, or otherwise processed.

Any appropriate electronically controlled valve system can be used to switch on and /or off the air supply. Computer controlled electronically operated valve systems are well known in the art. The skilled person is readily able to set up machines with the timing of such valve systems being selected to take into account operating conditions. Once a machine has been set up appropriately it can continue to run automatically until it is desired to cease operation. Indeed the machine may be designed provided so that minimal manual intervention is required from an operator. For example the operator may merely need to decide upon parameters such as speed and duration of operation.

In the embodiment of the invention illustrated in Figure 3a, outlet port (32) is not required and is blocked with a stopper. Alternatively, the distributor ring (18) may be manufactured without outlet port (32).

## Claims

1. Apparatus for the translocation of newly formed glassware from a first surface to a second surface, the apparatus comprising a pivotally mounted pusher having one or more cylinder bores that accommodate one or more reciprocating pistons and further comprising a retaining means that is connected to the pusher and retains the glassware during translocation; **characterised in that** the apparatus is provided with a gas supply via the pusher that is independent of any supply of gas to the one or more cylinder bores and assists in retaining the glassware during translocation and/or in cooling the glassware during translocation.

2. Apparatus according to claim 1, comprising two pivotally mounted cylinders each having a bore that accommodates a reciprocating piston.

3. Apparatus according to claim 1 or claim 2, wherein the retaining means comprises a plurality of protruding members for simultaneously engaging a plurality of pieces of newly formed glassware

4. Apparatus according to any preceding claim for translocating newly formed glassware to a conveyor; e.g. wherein the conveyor transports the glassware to a a lehr.

5. Apparatus according to any preceding claim comprising a distributor having a conduit that allows gas from said independent gas supply to be channelled towards said glassware for at least a proportion of the time during which pivoting of the pusher occurs.

6. Apparatus according to claim 5, wherein the distributor prevents gas from said independent gas supply being channelled towards glassware engaged by the retaining means, once the pusher has pivoted through a given angle.

7. Apparatus according to claim 5, wherein an automated valve, rather than the distributor, acts to prevent gas from said independent gas supply being channelled towards glassware engaged by the retaining means, once the pusher has pivoted through a given angle.

8. Apparatus according to claim 5 or claim 6, wherein the distributor comprises a further conduit that allows gas from said independent gas supply to be vented without contacting the glassware, once the pusher has pivoted through a given angle.

9. Apparatus according to any of claims 6 to 8, wherein said angle is
a) less than 90°
b) greater than 45°.
c) between 45° and 85°, e.g. between 50° and 70°, or
d) about 60°.

10. Apparatus according to any of claims 5 to 9, wherein the distributor engages a connecting member (e.g. a sole plate) that is rotatably mounted relative to the distributor and that is connected to the pusher.

11. Apparatus according to claim 10, wherein the connecting member is connected to an axle, upon which it is pivotally mounted and/or wherein said member is mounted to the pusher by means of a dovetail connection.

12. Apparatus according to claim 10 or 11, wherein said member comprises one or more conduits for transporting gas that is used to advance or retract the one or more pistons of the pusher, e.g. wherein said one or more conduits for transporting gas communicate with one or more conduits provided in the axle described in claim 11.

13. Apparatus according to claim 12, wherein said member comprises a further conduit that allows gas to pass from the independent air source through the distributor, through said further conduit and through a conduit provided in the pusher so that the gas can be directed from said independent gas source towards glassware that is engaged by the retaining means.

14. Apparatus according to claim 13, wherein one or more outlets for said gas from the independent gas source are provided at or close to the engaging means.

15. Apparatus according to any preceding claim, wherein a control is used to control the independent air supply and said control operates independently of a separate control used to control the supply of gas to operate the one or more reciprocating pistons; e.g. wherein the control that is used to control the independent air supply can be adjusted so that air can be supplied at different times and/or for different periods and/or at different pressures and/or at different temperatures.

16. An assembly comprising an apparatus according to any preceding claim and one or more i.s. machines, wherein the assembly is arranged so that the apparatus co-operates with the independent station machines in order to translocate newly formed glassware provided by the one or more independent station machines to a conveyor.

17. A method of producing glassware comprising using one or more i.s. machines to provide newly formed glassware, translocating the glassware to a conveyor by using an apparatus according to any of claims 1 to 16, and finishing the glassware; wherein said finishing optionally involves annealing and/or tempering the newly formed glassware.

18. A method of modification, wherein the method is:
a) a method of modifying an apparatus that is used for the translocation of newly formed glassware from a first surface to a second surface, the method comprising replacing a pusher of the apparatus with another pusher, wherein the other pusher has a gas supply that is independent of the supply of gas to one or more cylinder bores in which one or more reciprocating pistons of the other pusher are accommodated; or
b) a method of modifying a pusher of an apparatus that is used for the translocation of newly formed glassware from a first surface to a second surface, the method comprising providing the pusher with a gas supply that is independent of the supply of gas to one or more cylinder bores in which one or more reciprocating pistons of the pusher are accommodated.

19. Glassware produced by a method according to claim 17, an apparatus or pusher that has been modified by a method according to claim 18, or an assembly comprising such a modified apparatus or pusher.

20. A pusher for use in translocating glassware; wherein the pusher has a gas supply that is independent from the supply of gas to one or more cylinder bores in which one or more reciprocating pistons of the pusher are accommodated.
